# EUROPEAN PATENT SPECIFICATION

(11) **EP 2 963 296 B1**
(45) Date of publication and mention of the grant of the patent: **04.09.2019**
(21) Application number: 15174541.1
(22) Date of filing: 30.06.2015
(51) Int. Cl.: F04B 53/20, B01D 45/04, B01D 45/06, B01D 45/08

(54) **AIR COMPRESSION DEVICE**
LUFTKOMPRESSIONSVORRICHTUNG
DISPOSITIF DE COMPRESSION D'AIR

(30) Priority: 03.07.2014 JP 2014137941
(43) Date of publication of application: 06.01.2016
(73) Proprietor: Nabtesco Corporation, Tokyo 102-0093 (JP)
(72) Inventor: MIZUFUNE, Toru, Kobe-shi, Hyogo 651-2271 (JP); KUROMITSU, Masaru, Kobe-shi, Hyogo 651-2271 (JP); TAKAHASHI, Akira, Kobe-shi, Hyogo 651-2271 (JP)
(74) Representative: Grünecker Patent- und Rechtsanwälte PartG mbB

(56) References cited:
- JP-A- 2011 153 534
- JP-A- 2011 226 285
- US-A- 3 744 222
- US-A- 4 902 418
- US-A1- 2006 096 259
- US-A1- 2008 006 563
- US-B1- 6 328 778

## Description

The present invention relates to an air compression device according to the preamble of independent claim 1. Such an air compression device can be taken from the prior art document JP 2011 153534 A.

Prior art document US 6,328,778 B1 provides a filter apparatus for removing air entrained particles comprising a collapsible filter media. The filter media has a periphery. A continuous frame extends around and attaches to the periphery of the filter media whereby the filter media and attached frame together can be lengthwise collapsed. In particular the filter apparatus is provided with the combination of a first media member with a second media member. Said first member is provided with apertures and the second member is provided with air holes at apexes of convex portions.

Prior art document US 2008/0006563 A1 discloses an apparatuses for screening granular solid particulate material include a generally planar first screen and a second screen. A plurality of apertures extends through the first screen. At least a portion of the second screen is oriented at an angle to the first screen, and apertures extend through a perforated region of the second screen. The second screen includes at least one region configured to prevent at least some particles of solid material from passing through the second screen, wherein said second screen includes convex portions and concave portions.

An air compression device is attached to a vehicle (e.g. a train coach). The air compression device generates compressed air to be used in the vehicle (c.f. Japanese Utility Model Registration No. 3150077, hereinafter, simply called as Patent Document 1).

Patent Document 1 discloses an air compression device including filters, air compressors and driving motors. Each of the filters blocks passage of foreign matters (e.g. dust in the air). The air passing through each of the filters is fed to each of the air compressors. Each of the air compressors is driven by each of the driving motors for compressing the air.

Patent Document 2 (JP 2010-55973 A) discloses a housing, in which a battery module is stored. The housing is situated beneath a floor of a train coach. A filter unit is attached to the housing. The filter unit includes a louver and a filter. The louver prevents intrusion of foreign matters flying from the front side of the housing. The filter removes dust from the cooling air which is sucked from the outside of the housing.

The air compression device includes an after-cooler, a dehumidifying device and a housing, in addition to the air compressor and the filter. The after-cooler and the dehumidifying device are stored in the housing. The housing is situated beneath the floor of a vehicle body of the train coach. The filter is attached to the housing. The air to be compressed by the air compressor is supplied into the housing through the filter. Generally, a filter component made of resin is used as a filter in an air compression device. It is necessary to discard the filter component made of resin after use.

When a train runs in a region in which a lot of dust floats, a filter catches a large amount of dust in a short period of time. Consequently, it is necessary to frequently exchange the filter. The frequent filter exchange results in a large increase in maintenance cost.

An object of the invention is to provide an air compression device which contributes to a reduction in maintenance cost for dust removal without causing excessive degradation in dust removal performance.

According to the present invention said object is solved by an air compression device having the features of independent claim 1.

Preferred embodiments are laid down in the dependent claims.

An air compression device according to one aspect of the present invention includes a housing in which an air compressor is stored, the air compressor being configured to generate compressed air; and a filter through which air passes, the air being sucked into the housing. The filter includes a plate member having a first main plate portion provided with air holes through which the air passes. A surface of the first main plate portion is oriented in a first direction, the air holes extending through the plate member in a second direction intersecting with the first direction so as to change a flow direction of the air.

The aforementioned air compression device may contribute to a reduction in maintenance cost for dust removal without excessive degradation in dust removal performance.

These and other objects, features and advantages of the aforementioned air compression device will become more apparent upon reading the following detailed description along with the accompanying drawings.

### BRIEF DESCRIPTION OF THE DRAWINGS

FIG. 1 is a schematic view of an exemplary air compression device attached to a vehicle (in a train coach);
FIG. 2 is a plan view schematically showing an attachment position of the air compression device in the vehicle;
FIG. 3 is a schematic perspective view of the air compression device;
FIG. 4 is another schematic perspective view of the air compression device;
FIG. 5 is yet another schematic perspective view of the air compression device;
FIG. 6 is still another schematic perspective view of the air compression device;
FIG. 7 is a schematic view showing a system configuration of the air compression device depicted in FIG. 3;
FIG. 8 is a schematic perspective view showing one of two air compressor units in the air compression device depicted in FIG. 6;
FIG. 9 is another schematic perspective view of the air compressor unit;
FIG. 10 is a schematic perspective view showing an internal structure of the air compressor unit depicted in FIG. 9;
FIG. 11 is a schematic enlarged front view of a filter;
FIG. 12 is a schematic sectional view taken along the line XII-XII shown in FIG. 11; and
FIG. 13 is a schematic sectional view taken along the line XIII-XIII shown in FIG. 11.

### DETAILED DESCRIPTION OF THE PREFERRED EMBODIMENT

An exemplary air compression device is described below with reference to the drawings. The principle of the air compression device to be clarified by the following description is widely applicable to a variety of air compression devices which are attached to train coaches or other vehicles.

### [Installation of Air Compression Device]

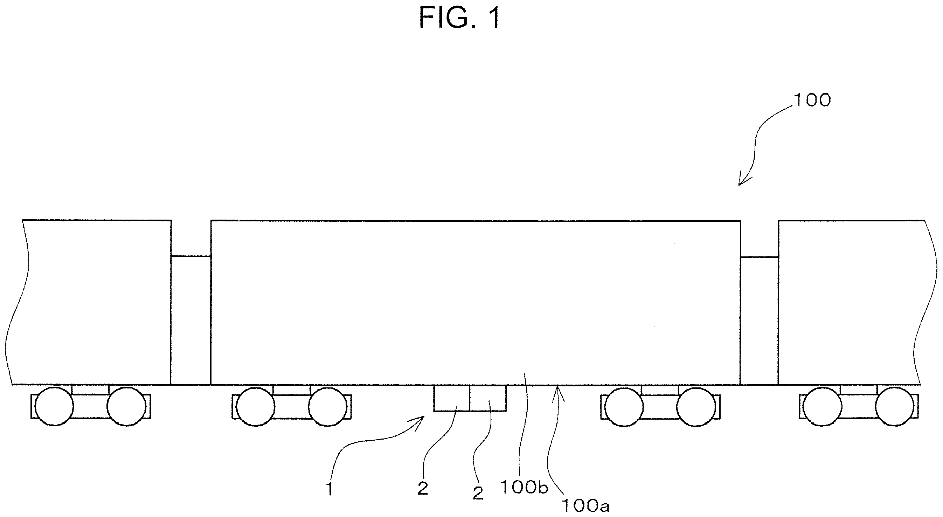

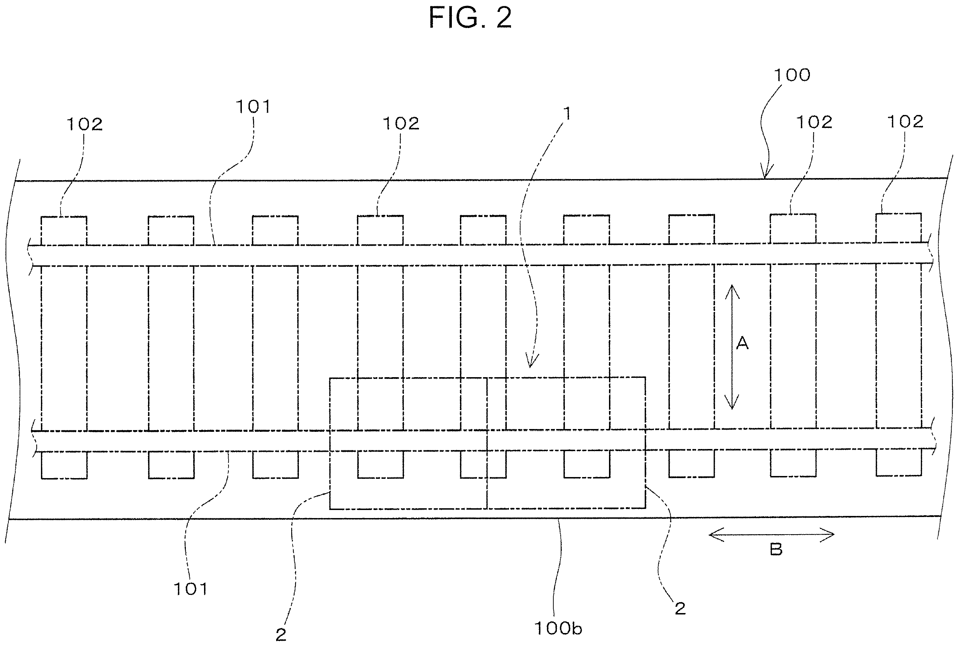

FIG. 1 is a schematic view of an air compression device 1 attached to a vehicle 100. In the present embodiment, the vehicle 100 is a train coach. Alternatively, the air compression device 1 may be attached to another vehicle (e.g. an automobile). FIG. 2 is a schematic plan view showing an attachment position of the air compression device 1 in the vehicle 100.

As shown in FIGS. 1 and 2, the air compression device 1 includes two air compressor units 2. The air compression device 1 may include one air compressor unit 2. Alternatively, the air compression device 1 may include three or more air compressor units 2. The principle of the embodiment is not specifically limited by how many air compressor units 2 are incorporated in the air compression device.

The air compression device 1 is attached to a lower portion of a floor 100a of the vehicle 100. Alternatively, the air compression device 1 may be attached to another portion of the vehicle 100. The principle of the present embodiment is not limited to a specific attachment position of the air compression device 1.

The air compression device 1 attached to the vehicle 100 uses the air compressor units 2 to generate compressed air. The vehicle 100 uses the compressed air to operate various pneumatic devices.

FIG. 2 is a plan view showing a part of the vehicle 100. The air compression device 1, which is fixed to a lower portion of the floor 100a of the vehicle 100 (i.e. two air compressor units 2), rails 101 on a railway track, along which the vehicle 100 runs, and railroad ties 102 are shown by the two-dotted chain lines in FIG. 2.

The arrow A in FIG. 2 represents the width direction of the vehicle 100. The arrow B in FIG. 2 represents the running direction of the vehicle 100. In the following description, a plane of the vehicle 100 extending along the direction of the arrow B substantially perpendicular to the ground is called as "side surface 100b". The air compression device 1 is situated along a plane extending downward from the side surface 100b. In the present embodiment, the vehicle side surface is exemplified by the side surface 100b.

The two air compressor units 2 are fixed to the lower portion of the floor 100a of the vehicle 100 so that the air compressor units 2 are aligned in series in the running direction of the vehicle 100.

### [Overall Configuration of Air Compression Device]

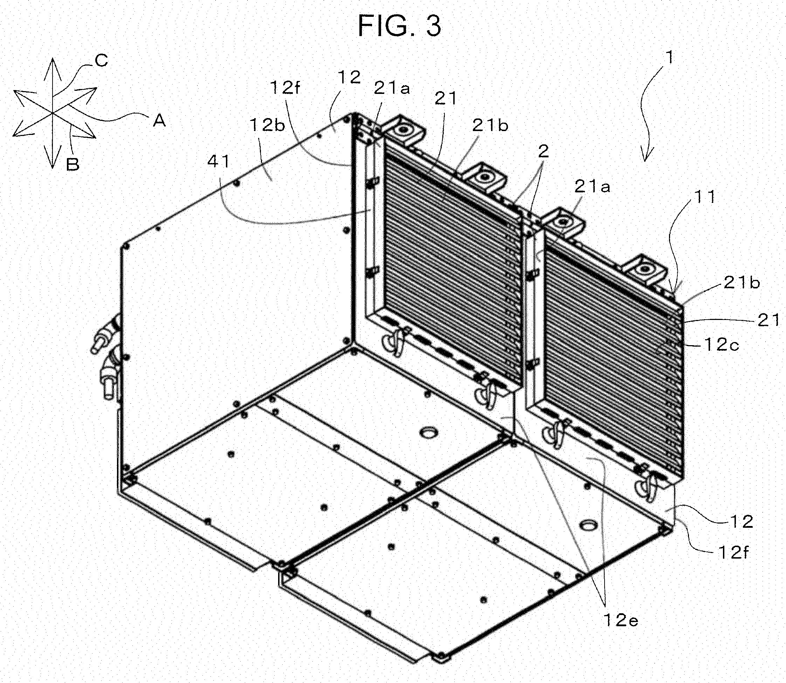

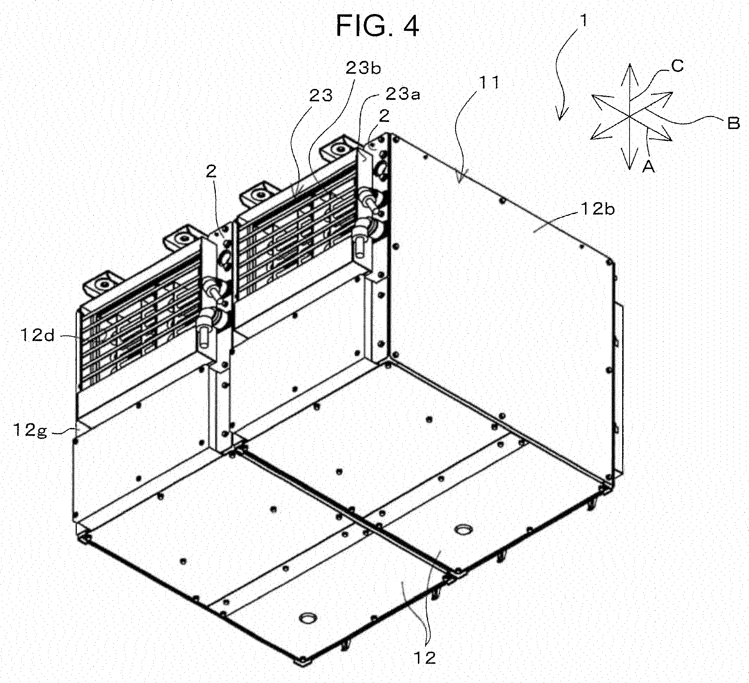

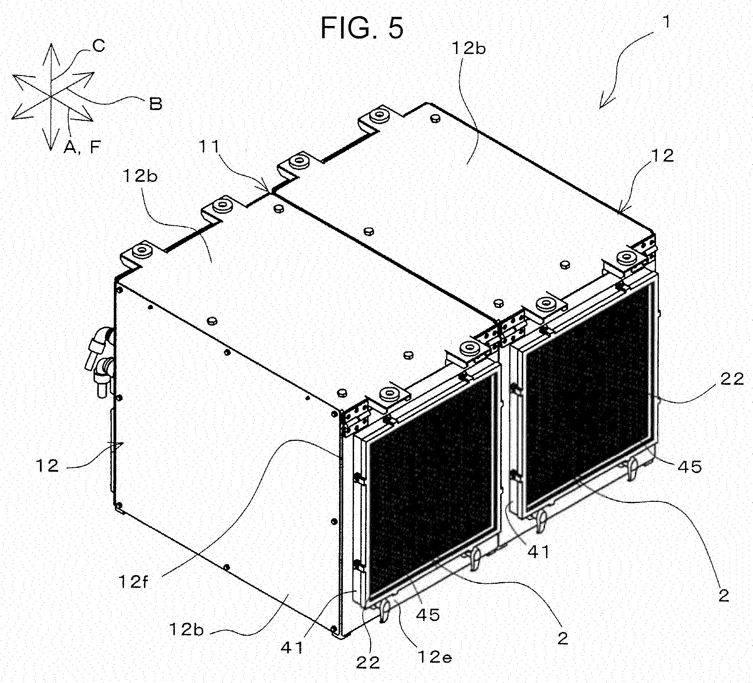

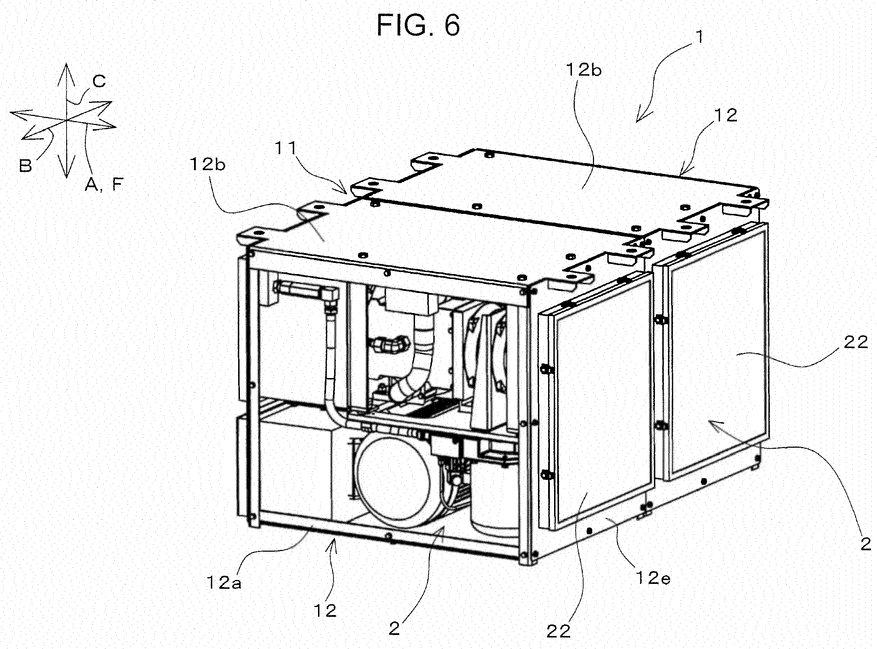

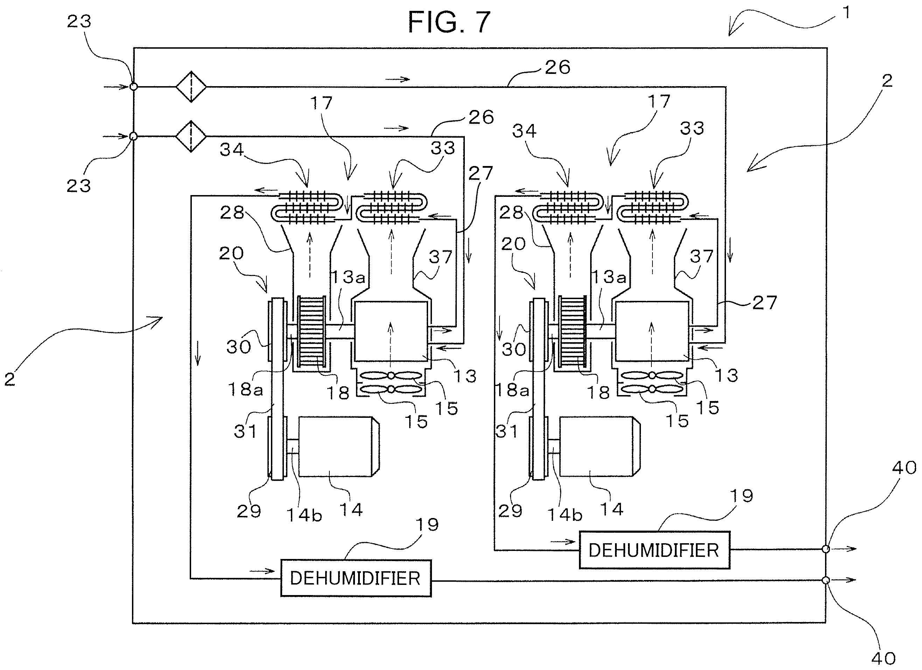

FIG. 3 is a schematic perspective view of the air compression device 1. FIG. 3 mainly shows the front surface and the bottom surface of the air compression device 1. FIG. 4 is another schematic perspective view of the air compression device 1. FIG. 4 mainly shows the rear surface and the bottom surface of the air compression device 1. FIG. 5 is yet another schematic perspective view of the air compression device 1. FIG. 5 mainly shows the front surface and the top surface of the air compression device 1. FIG. 6 is still another schematic perspective view of the air compression device 1. FIG. 6 mainly shows an internal structure of the air compression device 1. FIG. 7 is a schematic view showing a system configuration of the air compression device 1.

As described above, the air compression device 1 includes the two air compressor units 2. In addition, the air compression device 1 includes a case unit 11 as shown in FIGS. 3 to 6. The case unit 11 includes two individual cases 12. The individual cases 12 are prepared in correspondence to the air compressor units 2. When the air compression device includes one air compressor unit 2, an individual case 12 is used as the case unit. When the air compression device includes three or more air compressor units 2, individual cases 12 more than two are used as the case unit. Therefore, the principle of the present embodiment is not limited to how many individual cases 12 are incorporated in the air compression device.

In the present embodiment, the housing is exemplified by one of the two individual cases 12. Each of the two individual cases 12 functions as the housing for holding each of the two air compressor units 2.

Each of the two individual cases 12 includes frame pieces 12a (c.f. FIG. 6) and panels 12b. The frame pieces 12a and the panels 12b are assembled into a rectangular box. The panels 12b are attached to the frame pieces 12a so as to surround the air compressor unit 2. Each of the panels 12b is formed from a substantially rectangular metal plate.

With regard to the air compression device 1 shown in FIG. 6, one of the panels 12b is removed from one of the two individual cases 12. Therefore, FIG. 6 shows an internal structure of the air compression device 1.

FIGS. 3 to 6 show a coordinate system indicating directions. Each of the arrows A, B in the coordinate system shows the same directions as the arrows A, B shown in FIG. 2. Each of the two individual cases 12 includes side surfaces 12e, 12g. The side surfaces 12e, 12g (c.f. FIGS. 3 and 4) are aligned with each other in the direction of the arrow A. A substantially rectangular intake port 12c (c.f. FIG. 3) is formed in the side surface 12e. A substantially rectangular exhaust port 12d is formed in the side surface 12g. The side surface 12e extends along the side surface 100b of the vehicle 100 described with reference to FIG. 2. In the present embodiment, the housing side surface is exemplified by the side surface 12e.

Each of the two air compressor units 2 includes a first louver 21 (c.f. FIG. 3), a filter 22 (c.f. FIGS. 5 and 6) and a second louver 23 (c.f. FIG. 4). The first louver 21 and the filter 22 are attached to the intake port 12c. The second louver 23 is attached to the exhaust port 12d. The first and second louvers 21, 23 are removed from the air compression device 1 shown in FIG. 5. Therefore, FIG. 5 clearly shows the filter 22.

As described above, each of the two individual cases 12 holds each of the two air compressor units 2. The two individual cases 12 are aligned in series in the running direction of the vehicle 100 (the direction of the arrow B). The aligned two individual cases 12 are integrally fixed to the vehicle 100. The two air compressor units 2, each of which is held in the two individual cases 12, are also aligned in series in the running direction of the vehicle 100 (the direction of the arrow B). The case unit 11 appropriately holds the two air compressor units 2, which are aligned in the running direction of the vehicle 100.

### [Overall Configuration of Air Compressor Unit]

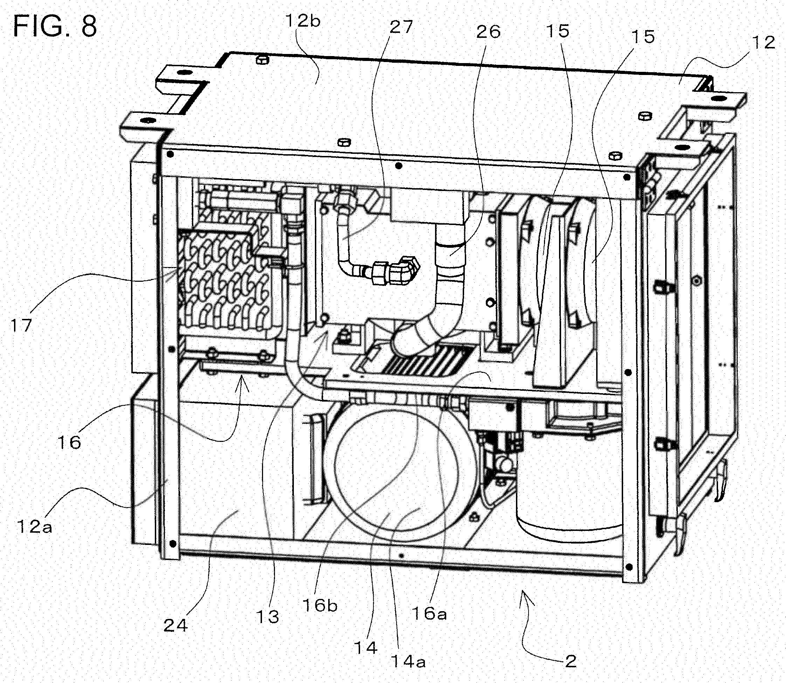

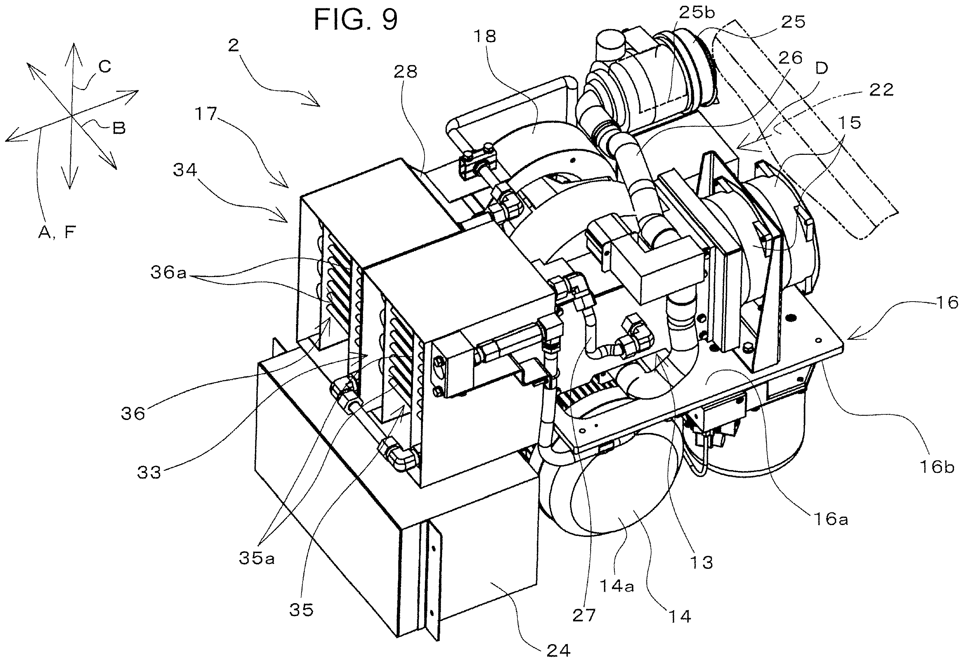

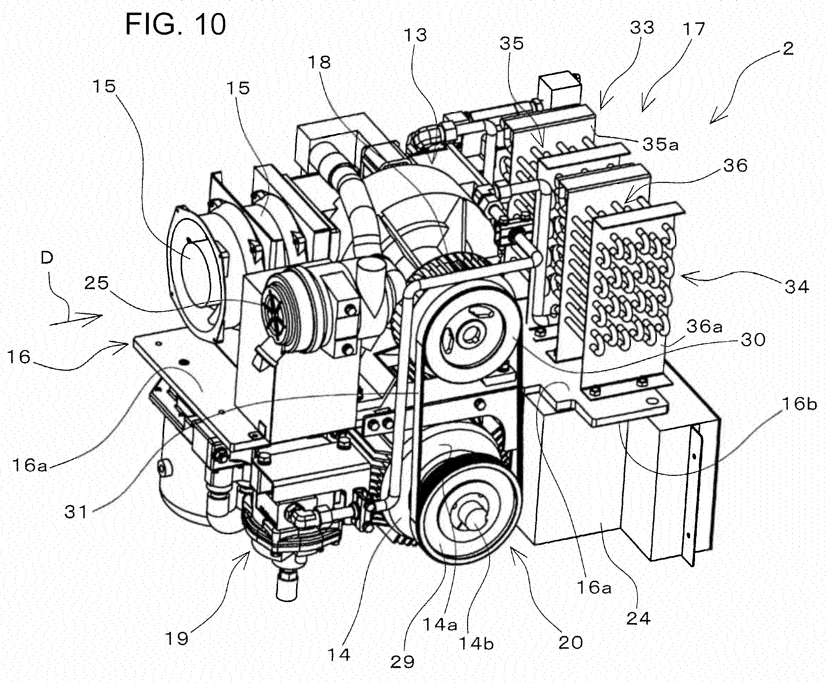

FIG. 8 is a schematic perspective view of one of the two air compressor units 2 shown in FIG. 6. FIG. 9 is another schematic perspective view of the air compressor unit 2 shown in FIG. 8. FIG. 9 is different from FIG. 8 in the viewing angle. FIG. 8 shows one individual case 12 surrounding an air compressor unit 2 whereas FIG. 9 does not show an individual case. FIG. 10 is a schematic perspective view showing an internal structure of the air compressor unit 2 depicted in FIG. 9. FIG. 10 is different from FIG. 9 in the viewing angle.

Each of the two air compressor units 2 includes an air compressor 13 (c.f. FIG. 8), an electric motor 14 (c.f. FIG. 8), cooling fans 15 (c.f. FIG. 8), a base 16 (c.f. FIG. 8), an after-cooler 17 (c.f. FIG. 8), a cooling fan 18 (c.f. FIG. 9), a dehumidifier 19 (c.f. FIG. 10), a transmitter 20 (c.f. FIG. 10), the first louver 21 (c.f. FIG. 3), the filter 22 (c.f. FIG. 3), the second louver 23 (c.f. FIG. 5) and a controller 24 (c.f. FIG. 8). The cooling fans 15 are used for cooling the air compressor 13 (c.f. FIG. 9). The cooling fan 18 is used for cooling the after-cooler 17. The two air compressor units 2 may be structurally identical to each other. Therefore, the following description is applied to each of the two air compressor units 2.

### [Air Compressor]

As shown in FIG. 8, the air compressor 13 is stored in the individual case 12. The air compressor 13 may be a general scroll compressor. The scroll compressor uses a swing scroll and a fixed scroll to compress sucked air and generate compressed air. The air compressor 13 may generate the compressed air without mixing oil into air (i.e. the air compressor may be an oil-free air compressor).

As shown in FIG. 9, the air compressor unit 2 includes a suction pipe 26 and an air suction portion 25. A negative pressure atmosphere is generated in the air suction portion 25 and the suction pipe 26 under operation of the air compressor 13. Consequently, the air outside the individual case 12 is sucked through the air suction portion 25. The suction pipe 26 is connected to the air suction portion 25 and a suction port (not shown) of the air compressor 13. The air flowing into the air suction portion 25 flows into the air compressor 13 through the suction pipe 26.

The air compressor unit 2 further includes a paper filter 25b. The paper filter 25b is situated in the air suction portion 25. The paper filter 25b traps dust (e.g. sand dust) in the air flowing into the air suction portion 25. The air suction portion 25 designed so that an operator takes out the paper filter 25b. Therefore, the operator may exchange the paper filter 25b with a new paper filter 25b.

The electric motor 14 drives the air compressor 13. When the air compressor 13 is driven, oscillatory rotation happens to the swing scroll with respect to the fixed scroll in the air compressor 13. The air flowing into the air compressor 13 through the air suction portion 25 and the suction pipe 26 is compressed between the swing scroll and the fixed scroll, and becomes compressed air during the oscillatory rotation.

The air compressor unit 2 further includes a discharge pipe 27. The discharge pipe 27 is connected to a discharge port (not shown) of the air compressor 13 and the after-cooler 17. The compressed air generated in the air compressor 13 flows into the discharge pipe 27 through the discharge port. The compressed air then flows into the after-cooler 17 through the discharge pipe 27. The discharge pipe 27 may be made of an appropriate elastic material (e.g. polytetrafluoroethylene (PTFE)). Alternatively, the discharge pipe 27 may be a copper pipe or a steel pipe. Further alternatively, the discharge pipe 27 may be a combination of pipe members made of an elastic material and a metal material. The principle of the present embodiment is not limited to a specific structure of the discharge pipe 27.

In the present embodiment, a scroll compressor is used as the air compressor 13. Alternatively, a screw air compressor may be incorporated in an air compressor unit. Further alternatively, a reciprocating air compressor may be incorporated in an air compressor unit. In this case, a rotational drive force generated by the electric motor for driving the air compressor is changed into a reciprocation drive force by a crankshaft. The air compressor uses the reciprocation drive force to compress the supplied air.

In the present embodiment, the air compressor 13 compresses the air without mixing oil into supplied air. Alternatively, the air compressor unit may include an air compressor configured to mix oil into supplied air. The air compressor may mix the oil into the supplied air, and then compress the air containing the oil.

### [First Louver]

As shown in FIGS. 3 and 5, the first louver 21 is placed over the filter 22 in the width direction of the vehicle 100 (the direction of the arrow A). The air outside the individual case 12 passes through the first louver 21 and the filter 22 sequentially, and flows into the individual case 12.

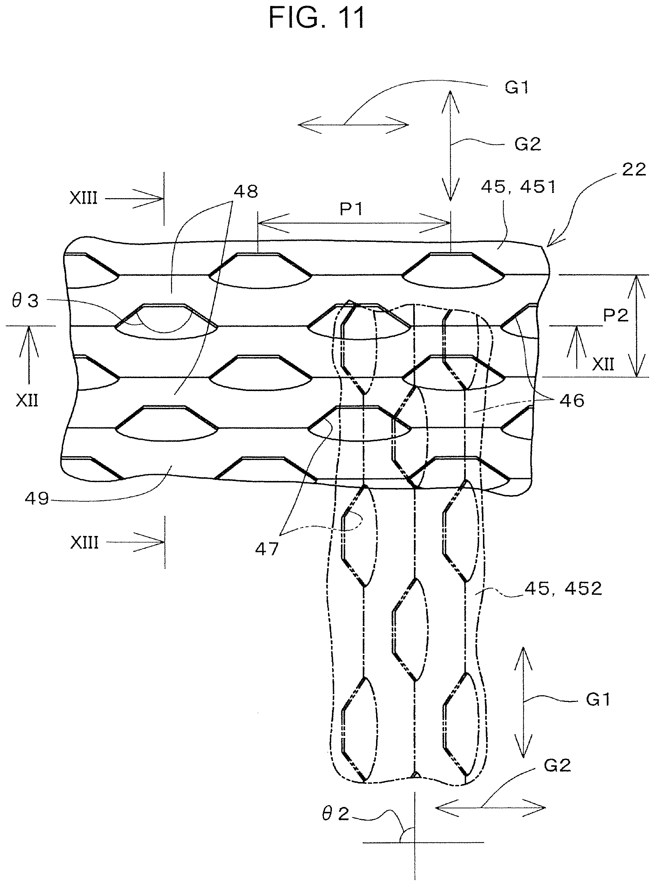

FIG. 11 is a schematic enlarged front view of the filter 22. As shown in FIG. 11, the filter 22 includes main plate portions 46 which are overlapped with each other. The coordinate system shown in FIG. 5 includes the direction of the arrow F coincident with the direction of the arrow A. The direction of the arrow F shows the overlapping direction of the main plate portions 46.

The first louver 21 is aligned in the overlapping direction (the direction of the arrow F) of the main plate portions 46. The first louver 21 appears on the outer surface of the individual case 12.

As shown in FIGS. 3 and 5, the individual case 12 includes a substantially rectangular attachment frame 41. The filter 22 and the first louver 21 are attached to the attachment frame 41. An operator may detach the first louver 21 from the attachment frame 41. The first louver 21 prevents adhesion of water (e.g. rainwater) and large foreign matters (e.g. a part of newspaper) to the filter 22.

As shown in FIG. 3, the first louver 21 includes a rectangular frame 21a and louver pieces 21b. The frame 21a is placed over and fixed to the attachment frame 41. Both ends of each of the louver pieces 21b are fixed to the frame 21a. Each of the louver pieces 21b is a plate-like member extending in the running direction of the vehicle 100 (the direction of the arrow B).

The direction of the arrow C of the coordinate system in FIG. 3 shows the vertical direction. The louver pieces 21b are aligned in the vertical direction (the direction of the arrow C) at regular intervals. Each of the louver pieces 21b is inclined so that the lower edge of each of the louver pieces 21b is more distant from the filter 22 than the upper edge of each of the louver pieces 21b is. A tip end of each of the louver pieces 21b (an end of each of the louver pieces 21b in the running direction of the vehicle 100 (the direction of the arrow B)) is substantially rectangular.

### [Schematic Configuration of Filter]

As shown in FIG. 9, the air passing through the filter 22 is sucked by the air suction portion 25 or the cooling fans 15. When the air outside the individual case 12 passes through the filter 22, the filter 22 removes foreign matters. As described above, the filter 22 is attached to the individual case 12. In the present embodiment, one filter 22 is attached for one air compression device 1.

### [Electric Motor and Controller]

As shown in FIGS. 7 to 10, the electric motor 14 is used as a driving source for driving the air compressor 13. The electric motor 14 generates a driving force. The driving force is transmitted from the electric motor 14 to the air compressor 13 by the transmitter 20. Oscillatory rotation happens to the swing scroll of the air compressor 13 under the transmission of the driving force to the air compressor 13.

The controller 24 (c.f. FIGS. 8 to 10) is used as a control device for supplying an electric current from a power source (not shown) to the electric motor 14, and controlling to drive the electric motor 14. The controller 24 controls the electric current to be supplied to the electric motor 14, and the number of rotations of the electric motor 14 (the rotating speed of the electric motor 14).

### [Cooling Fan for Cooling Air Compressor]

As shown in FIG. 9, the cooling fans 15 are adjacent to the air compressor 13 in the vehicle width direction (the direction of the arrow A). The cooling fans 15 generate cooling air for cooling the air compressor 13. The air compressor 13 is situated at the downstream of the cooling fans 15 in the flow direction of the cooling air. Therefore, the air compressor 13 is appropriately cooled.

Two cooling fans 15 are used for cooling one air compressor 13. The two cooling fans 15 may be axial fans, each of which has a propeller. The two cooling fans 15 are driven by an electric motor, which is provided independently of the electric motor 14. The two cooling fans 15 are aligned in series to coaxially rotate.

A cover surrounding the propellers of the cooling fans 15 is joined to a cover surrounding the air compressor 13. Therefore, the cooling air generated by the cooling fans 15 is efficiently fed to the air compressor 13. Consequently, the air compressor 13 is efficiently cooled. The broken-line arrows in FIG. 7 conceptually show a flow direction of the cooling air for cooling the air compressor 13 and a flow direction of the cooling air generated by the cooling fan 18 for cooling the after-cooler 17.

### [Base]

FIGS. 8 to 10 show the base 16 made of steel. Various devices such as the air compressor 13 and the electric motor 14 are attached to the base 16. In the present embodiment, the base 16 has a flat plate shape.

The base 16 includes a first surface 16a, which is oriented upward, and a second surface 16b, which is oriented downward. The first surface 16a is substantially parallel to the second surface 16b.

The air compressor 13 includes a casing, which is fixed to the first surface 16a of the base 16. The electric motor 14 includes a casing 14a, which is fixed to the second surface 16b. As shown in FIG. 9, the air compressor 13 and the electric motor 14 are aligned in the vertical direction (the direction of the arrow C) when the air compressor unit 2 is attached to the vehicle 100. The base 16 is situated between the air compressor 13 and the electric motor 14.

The air compressor 13 is distant upward from the electric motor 14 by a thickness of the base 16. The cooling fans 15 are situated above the first surface 16a, to which the air compressor 13 is attached. Therefore, the cooling fans 15 are also distant upward from the electric motor 14 by the thickness of the base 16. Therefore, the air compressor 13 and the cooling fans 15 are thermally isolated from the electric motor 14 by the base 16. In short, heat generated in the electric motor 14 becomes less influential to cooling of the air compressor 13 by the cooling fans 15. Accordingly, the cooling fans 15 may efficiently cool the air compressor 13.

The controller 24 is adjacent to the electric motor 14. The controller 24 is closer to the second surface 16b, to which the electric motor 14 is attached, than the first surface 16a, to which the air compressor 13 is attached. The controller 24 may or may not be fixed to the second surface 16b.

In the present embodiment, the air compressor 13 and the cooling fans 15 are situated on the base 16 whereas the electric motor 14 and the controller 24 are situated beneath the base 16 when the air compressor unit 2 is attached to the vehicle 100. Alternatively, the air compressor 13 and the cooling fans 15 may be situated beneath the base 16 whereas the electric motor 14 and the controller 24 may be situated on the base 16 when the air compressor unit 2 is attached to the vehicle 100.

### [Cooling Fan for Cooling After-Cooler]

As shown in FIG. 7, 9 and 10, the cooling fan 18 is driven by a driving force of the electric motor 14 to feed the cooling air to the after-cooler 17. When the cooling air is fed to the after-cooler 17, the after-cooler 17 is cooled from the outside. The cooling fan 18 may be a centrifugal fan (e.g. a sirocco fan). As described above, the broken line arrows in FIG. 7 show a flow direction of the cooling air toward the after-cooler 17.

As shown in FIG. 7, a rotary shaft 18a of the cooling fan 18 is coaxial with a rotary shaft 13a of the air compressor 13. The rotary shafts 18a, 13a are linearly aligned and integrally rotated. An air suction port of the cooling fan 18 is situated near the rotary shaft 13a of the air compressor 13.

The cooling fan 18 is rotated by the driving force which is generated by the electric motor 14. When the cooling fan 18 is rotated, a negative pressure atmosphere is generated near the rotary shaft 13a of the air compressor 13. Therefore, the air near the rotary shaft 13a of the air compressor 13 is sucked through the air suction port at the center of the cooling fan 18. The air sucked by the rotating cooling fan 18 flows radially from the cooling fan 18. Consequently, the air flows out from the circumferential surface of the cooling fan 18 as cooling air.

The air compressor unit 2 includes a duct 28. The cooling air, which is generated by the cooling fan 18, is guided by the duct 28 toward the after-cooler 17. The cooling air guided by the duct 28 blows onto the after-cooler 17. Accordingly, the after-cooler 17 is cooled. The duct 28 and a cover for the cooling fan 18 are removed from the air compressor unit 2 shown in FIG. 10.

### [Transmitter]

As shown in FIGS. 7 and 10, the transmitter 20 transmits a driving force from the electric motor 14 to the cooling fan 18 and the air compressor 13. The transmitter 20 includes a drive pulley 29, an idler pulley 30 and a drive belt 31.

As shown in FIG. 10, the drive pulley 29 is rotated together with a rotary shaft 14b of the electric motor 14. The idler pulley 30 is rotated together with the rotary shaft 18a of the cooling fan 18 and the rotary shaft 13a of the air compressor 13. The drive belt 31 is an endless belt, which is wound around the drive pulley 29 and the idler pulley 30.

When the rotary shaft 14b of the electric motor 14 is rotated, the drive pulley 29 is rotated together with the rotary shaft 14b. As a result of circulation of the drive belt 31 with a rotation of the drive pulley, the idler pulley 30 is also rotated. When the rotary shaft 18a of the cooling fan 18 is rotated together with the idler pulley 30, the cooling fan 18 is operated. As described above, the cooling shaft 18a of the cooling fan 18 is coaxially and integrally rotatable with the rotary shaft 13a of the air compressor 13. Therefore, the rotary shaft 13a of the air compressor 13 is rotated together with the rotary shaft 18a of the cooling fan 18.

### [After-Cooler]

The after-cooler 17 shown in FIGS. 7 to 10 cools the compressed air generated in the air compressor 13. As described above, the after-cooler 17 is connected to the air compressor 13 via the discharge pipe 27. The after-cooler 17 cools the compressed air flowing through the discharge pipe 27. As shown in FIGS. 8 to 10, the after-cooler 17 is fixed to the first surface 16a of the base 16.

As shown in FIG. 9, the after-cooler 17 includes a first cooler 33 and a second cooler 34.

The first cooler 33 includes a first flow channel 35. The compressed air, which is generated in the air compressor 13, flows along the first flow channel 35. The first flow channel 35 is cooled by the cooling air, which is generated by the cooling fans 15. As described above, the cooling fans 15 generate cooling air which flows toward the air compressor 13. The first cooler 33 is situated at the downstream of the air compressor 13 in the flow direction of the cooling air.

As described above, the cooling air generated by the cooling fans 15 cools the air compressor 13 from the outside. The cooling air then cools the first flow channel 35 of the first cooler 33 from the outside. The compressed air, which is cooled by the cooling air and flows inside the first flow channel 35, is cooled while the compressed air flows through the first flow channel 35.

The first flow channel 35 zigzags in the running direction of the vehicle 100 (the direction of the arrow B), and extends in the vertical direction (the direction of the arrow C). The after-cooler 17 includes plate-like cooling fins 35a. The cooling fins 35a are attached to the outer surface of the first flow channel 35. Each of the cooling fins 35a extends in parallel to the flow direction of the cooling air from the cooling fans 15 and in the vertical direction (the direction of the arrow C).

As shown in FIG. 7, the air compressor unit 2 includes a duct 37. The duct 37 is situated at the downstream of the air compressor 13 in the flow direction of the cooling air, which is generated by the cooling fans 15. The cooling air after the heat removal from the air compressor 13 is guided to the first cooler 33 through the duct 37.

As shown in FIG. 9, the second cooler 34 is connected to the first cooler 33. The second cooler 34 includes a second flow channel 36. The second flow channel 36 is connected to a downstream end of the first flow channel 35. The compressed air, which is cooled in the first cooler 33, flows into the second flow channel 36.

The second cooler 34 is cooled by the cooling air, which is generated by the cooling fan 18. The cooling air generated by the cooling fan 18 cools the second flow channel 36 of the second cooler 34 from the outside.

The second flow channel 36 zigzags in the running direction of the vehicle 100 (the direction of the arrow B), and extends in the vertical direction (the direction of the arrow C). The after-cooler 17 includes plate-like cooling fins 36a. The cooling fins 36a are fixed to the outer surface of the second flow channel 36. The cooling fins 36a extend in parallel to the flow direction of the cooling air from the cooling fan 18 and in the vertical direction (the direction of the arrow C). The compressed air flowing inside the second flow channel 36 is cooled by the cooling fan 18. Therefore, the compressed air, which is generated in the air compressor 13, is cooled in the first cooler 33, and then cooled in the second cooler 34.

The first cooler 33 is adjacent to the air compressor 13 in the direction designated by the arrow A. The second cooler 34 is adjacent to the cooling fan 18 in the direction designated by the arrow A. When the air compressor unit 2 is attached to the vehicle 100, the first and second coolers 33, 34 are aligned substantially horizontally in the direction designated by the arrow B.

The direction of the arrow D shown in FIGS. 9 and 10 schematically shows airflow in the individual case 12. The air flows from the first louver 21 to the second louver 23.

### [Dehumidifier]

The dehumidifier 19 shown in FIG. 10 dehumidifies the compressed air, which is cooled in the after-cooler 17. The dehumidifier 19 is connected to the downstream end of the second cooler 34. The compressed air cooled in the second cooler 34 flows into the dehumidifier 19.

As shown in FIG. 7, the air compression device 1 includes exit portions 40. The compressed air generated in the air compressor units 2 is fed from the exit portions 40 to the outside of the air compression device 1. Each of the dehumidifiers 19 is connected to each of the exit portions 40. The compressed air is supplied through the exit portions 40 to an accumulator tank (not shown) placed in the outside of the case unit 11. The accumulator tank stores the compressed air.

The compressed air, which is cooled in the second cooler 34, flows into the dehumidifier 19. The compressed air is then dehumidified by the dehumidifier 19. The compressed air, which is dehumidified by the dehumidifier 19, is fed to the accumulator tank through the exit portion 40.

### [Structure of Filter]

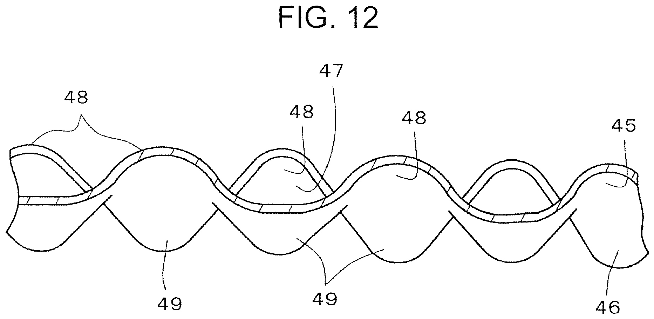

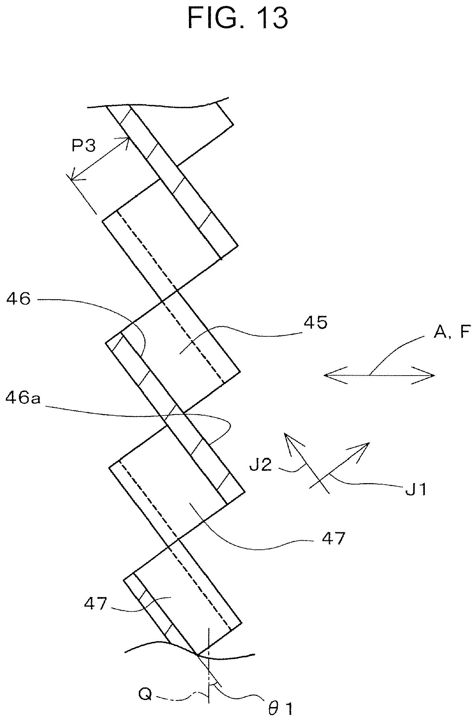

The structure of the filter 22 is described below. FIG. 11 is a schematic enlarged front view of the filter 22 (from the width direction of the vehicle 100 (the direction of the arrow A)). FIG. 12 is a schematic sectional view taken along the line XII-XII shown in FIG. 11. FIG. 13 is a schematic sectional view taken along the line XIII-XIII shown in FIG. 11.

As shown in FIG. 5, the filter 22 is attached to the rectangular attachment frame 41 formed on the panel 12b which forms the side surface 12e of the individual case 12. An operator may detach the filter 22 from the attachment frame 41.

The attachment frame 41 defines an opening area on the side surface 12e of the individual case 12. The attachment frame 41 protrudes from the side surface 12e of the individual case 12 outwardly (in the width direction of the vehicle 100 (the direction of the arrow A)). The attachment frame 41 is formed along the outer edge 12f of the side surface 12e of the panel 12b. The filter 22 is attached to the inner peripheral surface of the attachment frame 41.

The filter 22 as a whole is a rectangular member having a predetermined thickness. The filter 22 is oriented to the outside of the vehicle 100 in the width direction of the vehicle 100 (the direction of the arrow A).

As shown in FIG. 11, the filter 22 includes plate members 45. The plate members 45 are overlapped with each other to form the filter 22. The overlapping direction (the direction of the arrow F) in which the plate members 45 are overlapped with each other is substantially parallel to the width direction of the vehicle 100 (the direction of the arrow A). The filter 22 occupies a large part (at least a half or more) of the side surface 12e.

The air passing through the first louver 21 flows through the filter 22. The filter 22 removes foreign matters (e.g. dust) from the air. The cleaned air flows into the individual case 12. The air passing through the filter 22 is sucked into the air compressor 13 and the cooling fans 15 in the individual case 12. The filter 22 causes turbulence of the air passing through the filter 22. As a result of the turbulence, the foreign matters are separated from the airflow.

As described above, the filter 22 includes the plate members 45. A manufacturer manufacturing the air compression device 1 may perform a cutting process and a bending process for a metal plate (an aluminum plate member) having a thickness in the range from about 0.1 mm to 0.2 mm to manufacture a plate member 45. The filter 22 may include about ten plate members 45. FIG. 11 shows two plate members 45. The plate members 45 are overlapped in the direction of the arrow F at a predetermined interval. The attachment frame 41 supports each of the plate members 45.

The plate members 45 are arranged away from each other in the direction of the arrow F at an interval of about 1 mm. A gap is formed between the adjacent plate members 45. Therefore, there is a decrease in pressure loss of air passing through the filter 22. In addition, the gap between the adjacent plate members 45 makes it easy to wash the filter 22. Alternatively, the plate members 45 may be brought into close contact with each other. The principle of the present embodiment is not limited by the presence or absence of a gap between the plate members 45. In the present embodiment, the third direction is exemplified by the direction designated by the arrow F.

Each of the plate members 45 includes a main plate portion 46. Air holes 47 for passing the air are formed in the main plate portion 46. The main plate portion 46 includes convex surfaces 48 formed into a convex shape, and concave surfaces 49 formed into a concave shape. The convex surfaces 48 and the concave surfaces 49 are alternately and continuously formed. Therefore, the main plate portion 46 as a whole has a wavy surface configuration. The air holes 47 are formed by the convex surfaces 48 and the concave surface 49. In the present embodiment, the first main plate portion is exemplified by the main plate portion 46 of one of the two plate members 45 shown in FIG. 11. The second main plate portion is exemplified by the main plate portion 46 of the other of the two plate members 45 shown in FIG. 11.

As shown in FIG. 13, an air hole 47 extends through a plate member 45 along a direction (the direction of the arrow J2) intersecting with the direction, in which a surface 46a of the main plate portion 46 is oriented (the direction of the arrow J1, i.e. in a direction normal to the surface 46a). The directions designated by the arrows J1, J2 are different from the direction designated by the arrows A, F. The air flows in the direction of the arrows A, F shown in FIG. 13 before the air reaches the filter 22. The air hole 47 changes the air flow direction from the direction designated by the arrows A, F to the direction designated by the arrow J2. The air passes through the air holes 47, and flows into the individual case 12. In the present embodiment, the first direction is exemplified by the direction designated by the arrow J1 whereas the second direction is exemplified by the direction designated by the arrow J2.

FIG. 13 conceptually shows an imaginary plane Q perpendicularly intersecting with the direction of the arrows A, F. The air hole 47 extends in a direction at a first intersection angle θ1 (90°>θ1>0°) with respect to the imaginary plane Q. Preferably, the first intersection angle θ1 may be in the range of not smaller than 30° but not larger than 60°. More preferably, the first intersection angle θ1 may be about 45°.

An increase in the first intersection angle θ1 results in a decrease in pressure loss when the air passes through the air hole 47. If the first intersection angle θ1 is excessively large, the airflow is less likely to hit the main plate portion 46. Therefore, foreign matters are less likely to be separated from the airflow. This means degradation of the dust collecting effect.

If the first intersection angle θ1 is excessively small, there is high pressure loss when the airflow passes through the air hole 47. Accordingly, the air hole 47 is likely to clog. This means degradation of the dust collecting effect.

When the first intersection angle θ1 is in the range of not smaller than 30° but not larger than 60°, the dust collecting effect is maintained at a high level. When the air passes through the air hole 47, the air flow direction is changed so as to cause turbulence.

As shown in FIG. 11, the plate members 45 include plate members 451, 452. The air holes 47 are formed in each of the plate members 451, 452. The air holes 47 formed in the plate member 451 are aligned substantially at regular intervals (e.g. at an interval P1=about 10 mm) along the direction coincident with a bending line defined by a convex surface 48 or a concave surface 49 of the plate member 451 (the direction of the arrow G1). In the present embodiment, the surface of the plate member is exemplified by the imaginary plane including the bending lines.

The air holes 47 formed in the plate member 451 are oblong holes extending along the direction of the arrow G1. The air holes 47 formed in the plate member 452 are aligned substantially at regular intervals (e.g. at intervals of about 10 mm) in a direction along the surface 46a of the main plate portion 46 (the direction of the arrow G2). The air holes 47 formed in the plate member 452 are oblong holes extending along the direction of the arrow G2. In the present embodiment, the first main plate portion is exemplified by the main plate portion 46 of the plate member 451. The first through hole is exemplified by one of the air holes 47 which is formed in the plate member 451. The second air hole is exemplified by another of the air holes 47 which is formed in the plate member 451. The fourth direction is exemplified by the direction which is designated by the arrow G1. The second main plate portion is exemplified by the main plate portion 46 of the plate member 452. The third air hole is exemplified by one of the air holes 47 which are formed in the plate member 452. The fourth air hole is exemplified by another of the air holes 47 which are formed in the plate member 452. The fifth direction is exemplified by the direction which is designated by the arrow G2.

The direction designated by the arrow G1 has a right angle with respect to the direction designated by the arrow G2. The air holes 47 formed in the plate member 451 are also aligned substantially at regular intervals (e.g. at an interval P2=about 5 mm) in the direction designated by the arrow G2. The air holes 47 formed in the plate member 452 are also aligned substantially at regular intervals (e.g. at intervals of about 5 mm) in the direction designated by the arrow G1. In the present embodiment, the second intersection angle is exemplified by the intersection angle at which the direction designated by the arrow G1 intersects with the direction designated by the arrow G2.

As described above, each of the air holes 47 is formed by combination of a convex surface 48 and a concave surface 49. The height P3 of the air hole 47 to be defined in a direction connecting the apex of the convex surface 48 with the bottom of the concave surface 49 is set to be about 2 mm. The opening angle θ3 of the air hole 47 as viewed in the overlapping direction (the direction of the arrow F) is set to be about 110°.

The direction designated by the arrow G1 may be substantially parallel to the running direction of the vehicle 100 (the direction of the arrow B). In this case, the direction designated by the arrow G2 is substantially parallel to the vertical direction of the vehicle 100 (the direction of the arrow C).

The filter 22 may be vibrated by a vibrator (not shown). Alternatively, the filter 22 may be washed by an operator. Therefore, the filter 22 is appropriately cleaned. This makes it possible to reuse the filter 22.

As shown in FIG. 9, the filter 22 is adjacent to the air suction portion 25. The filter 22 is aligned with the air suction portion 25 in the width direction of the vehicle 100 (the direction of the arrow A). The filter 22 is adjacent to the cooling fans 15. The filter 22 is aligned with the cooling fans 15 in the width direction of the vehicle 100 (the direction of the arrow A). As described above, the arrow D in FIG. 9 shows airflow in the individual case 12. The air compressor 13 and the cooling fans 15, 18 are situated at the downstream of the filter 22 in the air flow direction in the individual case 12. As shown in FIG. 4, the exhaust port 12d is situated at the downstream of the air compressor 13 and the cooling fans 15, 18 in the air flow direction in the individual case 12.

As shown in FIGS. 3 and 4, the first louver 21, the filter 22 and the cooling fans 15 are arranged sequentially along the air flow direction (the direction of the arrow D) in the individual case 12. The air compressor 13 and the cooling fan 18 are situated at the downstream of the cooling fans 15 in the air flow direction (the direction of the arrow D) in the individual case 12. The after-cooler 17 is situated at the downstream of the air compressor 13 and the cooling fan 18 in the air flow direction (the direction of the arrow D) in the individual case 12. The exhaust port 12d and the second louver 23 are situated at the downstream of the after-cooler 17 in the air flow direction (the direction of the arrow D) in the individual case 12.

### [Second Louver]

The second louver 23 shown in FIG. 4 is adjacent to the after-cooler 17. The air is discharged from the individual case 12 through the second louver 23. The second louver 23 is attached to the side surface 12g opposite to the side surface 12e of the individual case 12. The second louver 23 prevents adhesion of water (e.g. rainwater) and large foreign matters (e.g. a part of newspaper) to the filter 22. The second louver 23 is formed in a substantially upper half area of the side surface 12g. The second louver 23 covers the exhaust port 12d formed in the side surface 12g.

The second louver 23 includes a frame 23a and louver pieces 23b.

The frame 23a is rectangular. The frame 23a is attached to the panel 12b which forms the side surface 12g. The louver pieces 23b are fixed to the frame 23a. Each of the louver pieces 23b is a plate-like member extending in the running direction of the vehicle 100 (the direction of the arrow B). Both ends of each of the louver pieces 23b are fixed to the frame 23a. The louver pieces 23b are arranged in the vertical direction (the direction of the arrow C) substantially at regular intervals. Each of the louver pieces 23b includes an upper edge, and a lower edge more distant from the after-cooler 17 than the upper edge is. Therefore, each of the louver pieces 23b is inclined. Each of the louver pieces 23b has a substantially rectangular tip end in the width direction of the vehicle 100 (the direction of the arrow B) .

### [Operation of Air Compression Device]

An operation of the air compression device 1 is described. The solid lines in FIG. 7 conceptually show airflow under the operation of the air compression device 1.

A negative pressure atmosphere is generated under operation of the air compression device 1. The external air is sucked into the first louver 21 under the generated negative pressure atmosphere, and then reaches the filter 22. When the air reaches the filter 22, the air passes through each of the air holes 47 formed in the plate member 45 which is arranged on the surface of the filter 22 (c.f. FIG. 11). When the air passes through the air holes 47 of the succeeding plate member 45, the flow direction of air is changed by the right angle. The air then flows along the extending direction of the air holes 47.

The air passing through the air holes 47 of one of the plate members 45 is changed in flow direction by the right angle while the air passes through the air holes 47 of the succeeding plate member 45, and then flows along the extending direction of the air holes 47. Whenever the air passes through one of the plate members 45, the air flow direction is sharply changed while the air passes in the filter 22. Therefore, spiral airflow is generated in the filter 22. A part of the dust in the air passing in the filter 22 is separated from the airflow by inertia. Another part of the dust hits on the plate members 45 to be separated from the airflow. The dust then falls onto a lower portion of the filter 22. The air after the dust removal passes through the filter 22, and then flows into the individual case 12.

As shown in FIG. 9, the air flowing into the individual case 12 is sucked into the air suction portion 25, and then flows into the air compressor 13. The air compressor 13 is driven by the electric motor 14 which is operated under control of the controller 24. The air compressor 13 is cooled by the cooling air which is generated by the cooling fans 15.

The air sucked through the air suction portion 25 flows into the air compressor 13. The air compressor 13 compresses the air to generate compressed air. The compressed air, which is generated by the air compressor 13, flows into the after-cooler 17. The after-cooler 17 cools the compressed air. The compressed air passes through the first flow channel 35 of the first cooler 33.

The cooling air generated by the cooling fans 15 cools the air compressor 13. The cooling air then cools the first flow channel 35 from the outside. Accordingly, the compressed air is cooled inside the first flow channel 35. The compressed air, which is cooled inside the first cooler 35, passes through the second flow channel 36 of the second cooler 34. The second flow channel 36 is cooled from the outside by the cooling air which is generated by the cooling fan 18. Therefore, the compressed air is cooled inside the second flow channel 36.

The compressed air which is cooled by the after-cooler 17 flows into the dehumidifier 19. The dehumidifier 19 dehumidifies the compressed air. The compressed air, which is dehumidified by the dehumidifier 19, is fed through the exit portion 40. The compressed air is then supplied to the accumulator tank.

The air passing through the cooling fins 35a, 36a of the after-cooler 17 is discharged to the outside of the individual case 12 through the exhaust port 12d and the second louver 23 (c.f. FIG. 4)

### [Advantageous Effects of Air Compression Device]

According to the present embodiment, it is possible to repeatedly use the filter 22 without discarding the filter 22. The filter 22 changes the flow direction of air passing through the air holes 47. When the air flows through the filter 22, foreign matters with large inertia such as dust are separated from the airflow. Since the foreign matters fall off from the main plate portions 46 of the filter 22, there is little adhesion of the foreign matters to the filter 22. The filter 22 is repeatedly used by performing a washing process or a vibration process, unlike a filter structure configured so that foreign matters are filtrated through a mesh of the filter. Therefore, it is not necessary to exchange the filter 22 or it is possible to remarkably reduce a frequency of exchanging the filter 22. Foreign matters are less likely to adhere to the main plate portions 46. Therefore, it is possible to keep dust removal performance of the filter 22 at a high level for a long period of time. Therefore, the air compression device 1 may allow a reduction in maintenance cost for dust removal without excessive degradation of the dust removal performance.

The plate members 45 are aligned in the direction designated by the arrow F. The air holes 47 of each of the plate members 45 extend in a direction at the first intersection angle θ1 with the imaginary plane Q which perpendicularly intersects with the direction designated by the arrow F. Accordingly, the airflow passing through the filter 22 makes strong turbulence. Foreign matters in the airflow are likely to hit the main plate portions 46. Therefore, a lot of the foreign matters are separated from the airflow. Accordingly, the filter 22 may trap a large amount of dust.

The air holes 47 formed in the plate member 451 are oblong holes extending in the direction designated by the arrow G1. The air holes 47 formed in the plate member 452 adjacent to the plate member 451 are oblong holes extending in the direction designated by the arrow G2. The direction of the arrow G1 has a second intersection angle θ2 (180°>θ2>0°) with the direction of the arrow G2. Foreign matters in the airflow passing through the filter 22 are likely to hit the main plate portions 46. Therefore, the filter 22 may trap a large amount of dust.

The second intersection angle θ2 may be set to 90°. In this case, there is a large change in direction of the airflow passing through the filter 22. Foreign matters in the airflow are likely to hit the main plate portions 46 in the filter 22. Therefore, the filter 22 may trap a large amount of dust.

The direction designated by the arrow G1 may be substantially parallel to the running direction of the vehicle 100 (the direction of the arrow B). The direction designated by the arrow G2 may be substantially parallel to the vertical direction of the vehicle 100 (the direction of the arrow C). Accordingly, the dust collecting performance of the filter 22 is less likely to depend on the running direction of the vehicle 100 (the direction of the arrow B).

The filter 22 may occupy at least a half or more of the area surrounded by the outer edge 12f of the side surface 12e of the individual case 12. This allows for the filter 22 to have a large opening area. Therefore, the cooling air for cooling the air compressor 13 is likely to flow into the individual case 12 through the filter 22 while the vehicle 100 runs. The air compressor 13 and other portions which are required to be cooled are appropriately cooled. The entire surface of the filter 22 is less likely to be blocked even when a large foreign matter (e.g. a part of newspaper) adheres to the surface of the filter 22 while the vehicle 100 runs. This allows for the external air to flow into the individual case 12 through the filter 22.

The attachment frame 41 is formed along the outer edge 12f of the side surface 12e of the individual case 12. This allows for a designer to set a large value for the opening area of the filter 22.

The attachment frame 41 protrudes outwardly from the side surface 12e of the individual case 12. The filter 22 is situated in the attachment frame 41. This allows for a designer to set a small value for a volume of the individual case 12 and a large space for installation of the filter 22. Since a variety of devices are situated in a space below the floor of the vehicle 100, it is important to set a small volume for the individual case 12.

Foreign matters (e.g. dust) are removed from the air by the filter 22. Therefore, clean air flows into the air compressor 13. This means that there is a decreased risk of foreign matters giving damage to a rotating portion (e.g. a bearing) of the air compressor 13. The first louver 21 receives water (e.g. rainwater). Therefore, water is less likely to flow into the housing through the filter 22. The first louver 21 functions as a protection wall against the filter 22. This means that there is a decreased risk of stepping stones hitting the filter 22 while the vehicle 100 runs. In addition, the first louver 21 prevents adhesion of large dust to the filter 22. Since the filter 22 is less likely to be smeared, it is not necessary to frequently exchange the filter 22. This means a reduction in maintenance cost of the air compression device 1.

The air compressor 13 and the cooling fan 18 are aligned in the width direction of the vehicle 100 (the direction of the arrow A) from the filter 22. As described above, the air flowing into the individual case 12 is cleaned by the filter 22. Therefore, little dust reaches the air compressor 13 and the cooling fan 18. This means a decreased risk of dust giving damage to the air compressor 13 when the dust is adhered to the main shaft of the air compressor 13. Since the air compressor 13 is less likely to be damaged, it is not necessary to frequently perform a maintenance operation of the air compressor 13.

The paper filter 25b may be used in combination with the filter 22. As described above, the filter 22 effectively removes foreign matters. Therefore, it is not necessary to frequently exchange the paper filter 25b.

As described above, the cooling fins 35a, 36a receive cooling air from the cooling fan 18. As described above, the filter 22 removes a large amount of foreign matters. Therefore, the cooling fins 35a, 36a are less likely to be smeared. Accordingly, it is not necessary to frequently wash the individual case 12.

The air compression device 1 is arranged along an imaginary extension plane which extends downward from the side surface 101b of the vehicle 100 in the width direction of the vehicle 100 (the direction of the arrow A). The filter 22 is oriented toward the outside of the vehicle 100. Therefore, the filter 22 is situated at the upstream in the flow direction of traveling air of the vehicle 100. Since cool air flows into the individual case 12 through the filter 22, various equipment in the individual case 12 are effectively cooled. Since the filter 22 is arranged along the side surface of the vehicle 100, an operator may easily access the filter 22. Therefore, the operator may easily inspect and/or repair the filter 22. This means a reduction in maintenance cost of the filter 22.

### [Modifications]

A person skilled in the art may modify the present embodiment in various ways as far as the modifications are within a scope of the principle of the present embodiment.
(1) With regard to the aforementioned embodiment, the air compression device 1 includes a scroll air compressor. Alternatively, the air compression device may include a screw air compressor. Further alternatively, the air compression device may include a reciprocating air compressor configured to change a rotational drive force from an electric motor into a reciprocation drive force via a crankshaft. The air compression device may include an air compressor for compressing the air containing oil.
(2) With regard to the aforementioned embodiment, the air compressor 13 and the electric motor 14 are aligned in the vertical direction. Alternatively, the air compressor and the electric motor may be aligned in another direction.
(3) With regard to the aforementioned embodiment, two cooling fans are arranged in one air compressor unit. Alternatively, one cooling fan may be arranged in one air compressor unit. Further alternatively, three or more cooling fans may be arranged in one air compressor unit.
(4) With regard to the aforementioned embodiment, the air compression device 1 is placed in a lower portion of the floor of the vehicle 100. Alternatively, the air compression device may be placed in a place other than the lower portion of the floor of the vehicle. For instance, the air compression device may be placed in an upper portion of the roof of the vehicle.
(5) With regard to the aforementioned embodiment, the air holes formed in one of the main plate portions are oblong holes extending in the running direction of the vehicle whereas air holes formed in the other of the main plate portions are oblong holes extending in the vertical direction of the vehicle. Alternatively, the air holes may be oblong holes extending in anther direction. The principle of the present embodiment is not limited to a specific extending direction of oblong holes.
(6) With regard to the aforementioned embodiment, the air compression device is arranged along a side surface of a train coach. Alternatively, the air compression device may be arranged at the center in the width direction of the train coach.
(7) With regard to the aforementioned embodiment, the air compression device is attached to a train coach. Alternatively, the air compression device may be attached to another vehicle.

The air compression device described in the context of the aforementioned embodiment mainly includes the following features.
(1) An air compression device according to one aspect of the aforementioned embodiment includes a housing in which an air compressor is stored, the air compressor being configured to generate compressed air; and a filter through which air passes, the air being sucked into the housing. The filter includes a plate member having a first main plate portion provided with air holes through which the air passes. A surface of the first main plate portion is oriented in a first direction, the air holes extending through the plate member in a second direction intersecting with the first direction so as to change a flow direction of the air.
   According to the aforementioned configuration, the air holes extend in the second direction intersecting with the first direction, in which the surface of the first main plate portion is oriented, to change a flow direction of the air. Therefore, foreign matters with large inertia (e.g. dust) may be appropriately removed from the air passing through the filter. The foreign matters hitting the first main plate portion fall off from the first main plate portion. Therefore, the foreign matters are less likely to adhere to the filter. Accordingly, the filter may be repeatedly used without being thrown away, unlike a filter having a mesh structure configured to remove foreign matters. As described above, the foreign matters fall off from the first main plate portion. Therefore, dust removal performance of the filter is kept at a high level. Accordingly, the air compression device may contribute to a reduction in maintenance cost for dust removal without causing excessive degradation in the dust removal performance.
(2) With regard to the aforementioned configuration, the filter may include a second main plate portion aligned with the plate member in a third direction different from the first and second directions. The second direction may have a first intersection angle with an imaginary plane which perpendicularly intersects with the first direction.
   According to the aforementioned configuration, the air passing through the filter causes strong turbulence. Therefore, foreign matters in the air hit the first and/or second main plate portions, and then are effectively removed. Therefore, the filter may have high dust removal performance.
(3) With regard to the aforementioned configuration, the air holes in the first main plate portion may include a first air hole, and a second air hole aligned with the first air hole in a fourth direction along the surface of the plate member. The second main plate portion includes a third air hole extending in a fifth direction having a second intersection angle with the fourth direction, and a fourth air hole aligned with the third air hole in the fifth direction. Each of the first and second air holes may be an oblong hole extending in the fourth direction. Each of the third and fourth air holes may be an oblong hole extending in the fifth direction.
   According to the aforementioned configuration, a lot of foreign matters in the air passing through the filter hit the first and/or second main plate portions. Therefore, the filter may have high dust removal performance.
(4) With regard to the aforementioned configuration, the second intersection angle may be 90 degrees.
   According to the aforementioned configuration, there is a large change in direction of airflow passing through the filter. Therefore, a lot of foreign matters in the airflow hit the first and/or second main plate portions. Accordingly, the filter may have high dust removal performance.
(5) With regard to the aforementioned configuration, the second direction may be parallel to a running direction of a vehicle to which the air compression device is attached. The third direction may be parallel to a vertical direction of the vehicle.
   According to the aforementioned configuration, dust removal performance of the filter is less likely to depend on the running direction of the vehicle.
(6) With regard to the aforementioned configuration, the air compression device may further include a louver facing the first main plate portion. The louver may appear on an outer surface of the housing and allow passage of the air.
   According to the aforementioned configuration, the louver receives water (e.g. rainwater). Therefore, the water is less likely to flow into the housing through the filter. Since the louver functions as a protection wall against the filter, there is a decreased risk of stepping stones, which hits the filter, and large dust adhering to the filter while the vehicle runs. Since the filter is less likely to be smeared, there are less frequent exchanges of the filter. This means that there is a reduction in maintenance cost of the air compression device.
(7) With regard to the aforementioned configuration, the air compression device may further include a cooling fan which cools the air compressor and the compressed air in the housing. The air compressor and the cooling fan may be aligned with the filter.
   According to the aforementioned configuration, since the filter cleans the air, dust is less likely to reach the air compressor and the cooling fan. Since the air compression device is less likely to be damaged, it is not necessary to frequently perform maintenance operations.
(8) With regard to the aforementioned configuration, the vehicle may include a vehicle side surface along the running direction. The housing may include a housing side surface along the vehicle side surface. The filter may be attached to the housing side surface.

According to the aforementioned configuration, since cool air flows into the housing through the filter, the interior of the housing is effectively cooled. Since an operator may easily access the filter, the operator may easily inspect and/or repair the filter. This means that there is a reduction in maintenance cost of the filter.

### INDUSTRIAL APPLICABILITY

The invention is widely applicable to an air compression device which is attached to a vehicle.

## Claims

1. An air compression device (1), comprising:
a housing (12) in which an air compressor (13) is stored, the air compressor (13) being configured to generate compressed air, the housing (12) being adapted to be mounted on a vehicle (100); and
a filter (22) which is mounted in a side (12e) of the housing (12) and through which air passes, the air being sucked into the housing (12), wherein the filter (22) includes a plate member (45) having a first plate member (451) having a first main plate portion (46) having convex surface parts (48) and concave surface parts (49) that are alternately and continuously arranged, and
a second plate member (452) having a second main plate portion (46) having convex surface parts (48) and concave surface parts (49) that are alternately and continuously arranged, **characterized in that** air holes (47) are formed in each of the first main plate portion (46) and the second main plate portion (46) by combination of convex surface parts (48) and the concave surface parts (49), and
the air holes (47) extend in a direction at an intersection angle (θ) comprised between 90° and 0° with respect to the imaginary plane (Q), the imaginary plane (Q) perpendicularly intersecting with a width direction (A) of the vehicle (100), so as to change a flow direction of the air.

2. The air compression device (1) according to Claim 1, **characterized in that** the filter (22) includes a further plate member (45) aligned with the plate member (45) in the width direction of the vehicle (100), the further plate member (45) having the same air hole configuration as the plate member (45).

3. The air compression device (1) according to Claim 2, **characterized in that** the air holes (47) of the first plate member (451) are aligned in a first direction, and the air holes (47) of the second plate member (452) are aligned in a second direction.

4. The air compression device (1) according to Claim 3, **characterized in that** the intersection angle between the first direction and the second direction is 90 degrees.

5. The air compression device (1) according to Claim 1, **characterized by** an intake port (12c) formed in the side (12e) of the housing (12), and a louver (21), wherein the louver (21) and the filter (22) are attached to intake port (12c).

6. The air compression device (1) according to Claim 1, **characterized by** a cooling fan (15) which cools the air compressor (13) and the compressed air in the housing (12), wherein the air compressor (13) and the cooling fan (15) are aligned with the filter (22).

## Patentansprüche

1. Eine Luft-Kompressions-Vorrichtung (1), die umfasst:
ein Gehäuse (12), in dem ein Luft-Kompressor (13) gelagert ist, der Luft-Kompressor (13) ist konfiguriert, um komprimierte Luft zu erzeugen, das Gehäuse (12) ist angepasst, um an einem Fahrzeug (100) montiert zu werden; und
einen Filter (22), der an einer Seite (12e) des Gehäuses (12) montiert ist, und durch den Luft hindurchtritt, die Luft ist in das Gehäuse (12) gesaugt, wobei der Filter (22) ein Platten-Element (45) beinhaltet, das ein erstes Platten-Element (451) hat, welches einen ersten Haupt-Platten-Abschnitt 46 hat, der konvexe Flächen-Teile (48) und konkave Flächen-Teile (49) hat, die abwechselnd und kontinuierlich angeordnet sind, und
ein zweites Platten-Element (452) beinhaltet, das einen zweiten Haupt-Platten-Abschnitt (46) hat, der konvexe Flächen-Teile (48) und konkave Flächen-Teile (49) hat, die abwechselnd und kontinuierlich angeordnet sind, **dadurch gekennzeichnet, dass**
Luft-Löcher (47) in jedem von dem ersten Haupt-Platten-Abschnitt (46) und dem zweiten Haupt-Platten-Abschnitt (46) durch Kombination von konvexen Flächen-Teilen (48) und konkaven Flächen-Teilen (49) ausgebildet sind, und
die Luft-Löcher (47) sich in eine Richtung erstrecken mit einem Schnitt-Winkel (0), umfassend zwischen 90° und 0°, mit Bezug auf die imaginäre Ebene (Q), die imaginäre Ebene (Q) schneidet senkrecht mit einer Breiten-Richtung (A) von dem Fahrzeug (100), so dass eine Strömungs-Richtung der Luft geändert ist.

2. Die Luft-Kompressions-Vorrichtung (1) gemäß Anspruch 1, **dadurch gekennzeichnet, dass** der Filter (22) ein weiteres Platten-Element (45) beinhaltet, das mit dem Platten-Element (45) in der Breiten-Richtung des Fahrzeugs (100) ausgerichtet ist, das weitere Platten-Element (45) hat die gleiche Luft-Loch-Konfiguration wie das Platten-Element (45).

3. Die Luft-Kompressions-Vorrichtung (1) gemäß Anspruch 2, **dadurch gekennzeichnet, dass** die Luft-Löcher (47) von dem ersten Platten-Element (451) in eine erste Richtung ausgerichtet sind, und die Luft-Löcher (47) von dem zweiten Platten-Element (452) sind in eine zweite Richtung ausgerichtet.

4. Die Luft-Kompressions-Vorrichtung (1) gemäß Anspruch 3, **dadurch gekennzeichnet, dass** der Schnitt-Winkel zwischen der ersten Richtung und der zweiten Richtung 90 Grad ist.

5. Die Luft-Kompressions-Vorrichtung (1) gemäß Anspruch 1, **gekennzeichnet durch** einen Einlass-Anschluss (12c), der in der Seite (12e) von dem Gehäuse (12) ausgebildet ist, und ein Gitter (21), wobei das Gitter (21) und der Filter (22) an dem Einlass-Anschluss (12c) angebracht sind.

6. Die Luft-Kompressions-Vorrichtung (1) gemäß Anspruch 1, **gekennzeichnet durch** einen Kühl-Ventilator (15), der den Luft-Kompressor (13) und die komprimierte Luft in dem Gehäuse (12) kühlt, wobei der Luft-Kompressor (13) und der Kühl-Ventilator (15) mit dem Filter (22) ausgerichtet sind.

## Revendications

1. Dispositif de compression d'air (1) comprenant :
un boîtier (12) dans lequel est stocké un compresseur d'air (13), le compresseur d'air (13) étant configuré pour générer de l'air comprimé, le boîtier (12) étant adapté pour être monté sur un véhicule (100) ; et
un filtre (22) qui est monté dans un côté (12e) du boîtier (12) et à travers lequel de l'air passe, l'air étant aspiré dans le boîtier (12), dans lequel
le filtre (22) comprend un élément formant plaque (45) ayant un premier élément de plaque (451) ayant une première partie de plaque principale (46) ayant des parties de surface convexes (48) et des parties de surface concaves (49) qui sont agencées de manière alternée et continue, et un second élément de plaque (452) ayant une seconde partie de plaque principale (46) ayant des parties de surface convexes (48) et des parties de surface concaves (49) qui sont agencées de manière alternée et continue, **caractérisé en ce que**
des trous d'air (47) sont formés dans chacune parmi la première partie de plaque principale (46) et la seconde partie de plaque principale (46) par combinaison de parties de surface convexes (48) et des parties de surface concaves (49), et
les trous d'air (47) s'étendent dans une direction à un angle d'intersection (θ) compris entre 90° et 0° par rapport au plan imaginaire (Q), le plan imaginaire (Q) entrecoupant perpendiculairement une direction de largeur (A) du véhicule (100), de manière à changer une direction d'écoulement de l'air.

2. Dispositif de compression d'air (1) selon la revendication 1, **caractérisé en ce que** le filtre (22) comprend un autre élément formant plaque (45) aligné avec l'élément formant plaque (45) dans la direction de largeur du véhicule (100), l'autre élément formant plaque (45) ayant la même configuration de trous d'air que l'élément formant plaque (45).

3. Dispositif de compression d'air (1) selon la revendication 2, **caractérisé en ce que** les trous d'air (47) du premier élément de plaque (451) sont alignés dans une première direction, et les trous d'air (47) du second élément de plaque (452) sont alignés dans une seconde direction.

4. Dispositif de compression d'air (1) selon la revendication 3, **caractérisé en ce que** l'angle d'intersection entre la première direction et la seconde direction est de 90 degrés.

5. Dispositif de compression d'air (1) selon la revendication 1, **caractérisé par** un port d'admission (12c) formé dans le côté (12e) du boîtier (12), et un volet (21), dans lequel le volet (21) et le filtre (22) sont fixés au port d'admission (12c).

6. Dispositif de compression d'air (1) selon la revendication 1, **caractérisé par** un ventilateur de refroidissement (15) qui refroidit le compresseur d'air (13) et l'air comprimé dans le boîtier (12), le compresseur d'air (13) et le ventilateur de refroidissement (15) étant alignés avec le filtre (22).
